# EUROPEAN PATENT SPECIFICATION

(11) **EP 0 602 728 B1**
(45) Date of publication and mention of the grant of the patent: **10.01.1996**
(21) Application number: 93203461.4
(22) Date of filing: 09.12.1993
(51) Int. Cl.: C22C 38/00

(54) **Railway joint**
Schienenverbindung
Joint de rails

(30) Priority: 15.12.1992 GB 9226080
(43) Date of publication of application: 22.06.1994
(73) Proprietor: EDGAR ALLEN ENGINEERING LIMITED, Sheffield, S9 1QW (GB); BRITISH RAILWAYS BOARD, London NW1 1DZ (GB)
(72) Inventor: Connelly, Raymond, c/o Edgar Allen Eng. Ltd., Sheffield S9 1QW (GB); Pendleton, Desmond Roy, c/o Edgar Allen Eng. Ltd., Sheffield S9 1QW (GB)
(74) Representative: Long, Edward Anthony

(56) References cited:
- EP-A- 0 070 774
- EP-A- 0 181 251
- EP-A- 0 213 111
- EP-A- 0 260 233
- EP-A- 0 467 881
- GB-A- 1 552 392
- US-A- 5 041 174
- PECKNER AND BERNSTEIN 'Handbook of Stainless Steels' 1977 , MCGRAW HILL BOOK COMPANY , US

## Description

This invention relates to joints for the rails, frogs etc., of railways, tramways, light rail transit systems etc., all hereinafter collectively referred to as a "railway rails", and to a method of manufacturing such a joint.

The advantage is self-evident of inserting a component of high wear resistant, but relatively expensive, steel - conventionally an austenitic manganese steel - at a location of anticipated high wear e.g. at a crossing or frog. Mechanical connections, usually involving fish plates, have been used to secure such austenitic manganese steel components in position, but with the increasing installation of continuously welded rail, there is an increasing demand for an austenitic manganese steel crossing etc., capable of incorporation, by welding, in continuously welded rail track. However, austenitic manganese steel cannot be welded directly to pearlitic steel due to the composition and the differing heat treatments necessary to obtain the properties required of a railway rail. Consequently, the practice has evolved of interposing an insert of a third steel of composition that is weldable to both austenitic manganese steel and to pearlitic steel. GB-A-1 552 392 discloses an insert made of austenitic stainless steel, but being high in Cr and Ni this is relatively expensive and is not the simplest of materials to weld. EP-A-0 070 774 discloses a method of joining a cast manganese steel frog to carbon steel rails in which chrome nickel manganese steel inserts are welded to the frog and then the inserts are welded to the carbon steel rails, the inserts likewise being high in Cr and Ni. Also, another proposal in EP-A-0 467 881 has involved the need to effect a pre or post heat treatment e.g. at 350°C to 1000°C, to refine and temper the weld to provide enhanced fatigue resistance.

According to a first aspect of the present invention given in claim 1, there is provided a weldable joint for railways comprising;
(i) an austenitic manganese steel member, including

| | |
|---|---|
| manganese | 11.5 to 19% by wt |
| carbon | 0.6 to 0.95% by wt, |

secured by a first weld to
(ii) a bainitic steel insert, including

| | |
|---|---|
| boron up to | 0.01% by wt |
| molybdenum | 0.2 to 3% by wt |
| manganese | 0.3 to 3% by wt |

and optionally including

| | |
|---|---|
| copper | up to 6% by wt |
| nickel | up to 6% by wt |
| chromium | up to 6% by wt |

and of relatively short length secured by a second weld to
(iii) a pearlitic steel member, with heat from the second weld being transferred via the insert to the first weld thereby tempering the first weld.

Thus, in accordance with the invention, a weldable joint for railways is provided that is not only easily weldable by the use of the relatively cheap bainitic insert, but which advantageously also avoids the need for any pre or post heat treatment.

Clearly, for the joint to form a rail joint, then the bainitic insert needs to have the same industry-standard rail profile as a rail of pearlitic steel and a rail of manganese steel. For insertion of a frog etc., again the insert needs to have a matching profile.

A second aspect of the invention given in claim 3 is directed to a method of manufacturing such a joint.

All welding is preferably effected in a flash butt welding machine, whereby close monitoring and control of the welding parameters can be made.

## Claims

1. A weldable joint for railways comprising;
(i) an austenitic manganese steel member, including
| | |
|---|---|
| manganese | 11.5 to 19% by wt |
| carbon | 0.6 to 0.95% by wt, |
secured by a first weld to
(ii) a bainitic steel insert, including
| | |
|---|---|
| boron up to | 0.01% by wt |
| molybdenum | 0.2 to 3% by wt |
| manganese | 0.3 to 3% by wt |
and optionally including
| | |
|---|---|
| copper | up to 6% by wt |
| nickel | up to 6% by wt |
| chromium | up to 6% by wt, |
and of relatively short length secured by a second weld to
(iii) a pearlitic steel member, with heat from the second weld being transferred via the insert to the first weld thereby tempering the first weld.

2. A joint as claimed in Claim 1, wherein the bainitic steel insert is a length of rail of industry-standard profile.

3. A method of manufacturing the joint defined in Claims 1 and 2, comprising welding
(i) an austenitic manganese steel member, including
| | |
|---|---|
| manganese | 11.5 to 19% by wt |
| carbon | 0.6 to 0.95% by wt, |
to one end of
(ii) a bainitic steel insert, including
| | |
|---|---|
| boron up to | 0.01% by wt |
| molybdenum | 0.2 to 3% by wt |
| manganese | 0.3 to 3% by wt |
and optionally including
| | |
|---|---|
| copper | up to 6% by wt |
| nickel | up to 6% by wt |
| chromium | up to 6% by wt, |
and of relatively short length, and then welding the other end of the bainitic steel insert to
(iii) a pearlitic steel member, with heat from the second weld being transferred via the insert to the first weld thereby tempering the first weld.

4. A method of manufacturing the joint defined in Claim 3, wherein welding is effected by a flash butt welding machine.

## Patentansprüche

1. Schweißbare Verbindung für das Eisenbahnwesen mit
(i) einem Teil aus austenitischem Manganstahl mit
11.5 bis 19 Gewichts-% Mangan
0,6 bis 0,95 Gewichts-% Kohlenstoff,
das über eine erste Schweißverbindung befestigt ist an
(ii) einem Einsatzteil aus bainitischem Stahl mit
bis zu 0,01 Gewichts-% Bor
0,2 bis 3 Gewichts-% Molybdän
0,3 bis 3 Gewichts-% Mangan
und wahlweise mit
bis zu 6 Gewichts-% Kupfer
bis zu 6 Gewichts-% Nickel
bis zu 6 Gewichts-% Chrom
und wobei das Einsatzteil von relativ geringer Länge ist und über eine zweite Schweißverbindung befestigt ist an
(iii) einem Teil aus perlitischen Stahl, wobei Wärme von der zweiten Schweißverbindung über das Einsatzteil der ersten Schweißverbindung zugeführt und die erste Schweißverbindung dabei vergütet wird.

2. Verbindung nach Anspruch 1, wobei das Einsatzteil aus bainitischem Stahl ein Schienenstück mit einem industriellen Standardprofil ist.

3. Verfahren zur Herstellung der Verbindung nach Anspruch 1 oder 2, wobei
(i) ein Teil aus austenitischem Manganstahl mit
11,5 bis 19 Gewichts-% Mangan
0.6 bis 0,95 Gewichts-% Kohlenstoff,
mit einem Ende
(ii) eines Einsatzteiles aus bainitischem Stahl mit
bis zu 0,01 Gewichts-% Bor
0,2 bis 3 Gewichts-% Molybdän
0,3 bis 3 Gewichts-% Mangan
und wahlweise mit
bis zu 6 Gewichts-% Kupfer
bis zu 6 Gewichts-% Nickel
bis zu 6 Gewichts-% Chrom,
verschweißt wird, wobei das Einsatzteil von relativ geringer Länge ist, und wobei dann das andere Ende des Einsatzteiles aus bainitischem Stahl verschweißt wird mit
(iii) einem Teil aus perlitischem Stahl, wobei die Wärme der zweiten Schweißverbindung über das Einsatzteil der ersten Schweißverbindung zugeführt wird, wobei die erste Schweißverbindung vergütet wird.

4. Verfahren zur Herstellung der Verbindung nach Anspruch 3, wobei das Verschweißen in einer Abbrennschweißmaschine durchgeführt wird.

## Revendications

1. Jonction soudable pour chemins de fer, comprenant :
(i) un élément en acier austénitique au manganèse, comprenant
11,5 à 19 % en poids de manganèse
0,6 à 0,95 % en poids de carbone,
fixé par une première soudure à
(ii) un insert en acier bainitique comprenant
jusqu'à 0,01 % en poids de bore
0,2 à 3 % en poids de molybdène
0,3 à 3 % en poids de manganèse,
et comprenant en option
jusqu'à 6 % en poids de cuivre
jusqu'à 6 % en poids de nickel
jusqu'à 6 % en poids de chrome,
et de relativement courte longueur, fixé par une deuxième soudure à
(iii) un élément en acier perlitique, la chaleur issue de la deuxième soudure étant transférée à la première soudure via l'insert, soumettant ainsi la première soudure à un revenu.

2. Jonction selon la revendication 1, dans lequel l'élément en acier bainitique est une longueur de rail de profilé industriel standard.

3. Procédé de fabrication d'une jonction selon la revendication 1 ou 2, comprenant le fait de souder :
(i) un élément en acier austénitique au manganèse, comprenant
11,5 à 19 % en poids de manganèse
0,6 à 0,95 % en poids de carbone,
à une extrémité de
(ii) un insert en acier bainitique comprenant
jusqu'à 0,01 % en poids de bore
0,2 à 3 % en poids de molybdène
0,3 à 3 % en poids de manganèse,
qui comprend en option
jusqu'à 6 % en poids de cuivre
jusqu'à 6 % en poids de nickel
jusqu'à 6 % en poids de chrome,
et de relativement courte longueur, puis de souder l'autre extrémité de l'insert en acier bainitique à
(iii) un élément en acier perlitique, la chaleur issue de la deuxième soudure étant transférée à la première soudure via l'insert, soumettant ainsi la première soudure à un revenu.

4. Procédé de fabrication d'une jonction selon la revendication 3, dans lequel le soudage est effectué dans une machine de soudage par étincelage bout-à-bout.
